# EUROPEAN PATENT SPECIFICATION

(11) **EP 1 392 036 B1**
(45) Date of publication and mention of the grant of the patent: **28.02.2018**
(21) Application number: 03103203.0
(22) Date of filing: 15.08.2003
(51) Int. Cl.: H04L 29/06, H04L 12/28

(54) **Data transmission method and arrangement**
Verfahren und Vorrichtung zur Datenübertragung
Méthode et dispositif de transmission des données

(30) Priority: 22.08.2002 FI 20021512
(43) Date of publication of application: 25.02.2004
(73) Proprietor: Telia Finland Oyj, 00510 Helsinki (FI)
(72) Inventor: Korhonen, Jouni, 11100, Riihihäki (FI)
(74) Representative: Kolster Oy Ab

(56) References cited:
- WO-A-99/51055
- DE-A- 10 038 182
- BORMANN: "RFC 3095: Robust Header Compression" IETF REQUEST FOR COMMENTS, [Online] July 2001 (2001-07), XP002952298 Retrieved from the Internet: <URL:http://www.rz.informatik.uni-muenchen .de/doku/rfc/rfc3095.html> [retrieved on 2003-11-12]
- THOMPSON: "Tunneling Multiplexed Compressed RTP ("TCRTP")" IETF INTERNET DRAFT, [Online] February 2002 (2002-02), XP002262824 Retrieved from the Internet: <URL:http://www.ietf.org/proceedings/02jul /I-D/draft-ietf-avt-tcrtp-06.txt> [retrieved on 2003-11-24]
- KOODLI: "Context Relocation for Seamless Header Compression in IP Networks" IETF INTERNET DRAFT, [Online] July 2001 (2001-07), XP002262825 Retrieved from the Internet: <URL:http://www.watersprings.org/pub/id/dr aft-koodli-seamoby-hc-relocate-01.txt> [retrieved on 2003-11-24]

## Description

### FIELD

The invention relates to a method and arrangement for transmitting data in a telecommunications network.

### BACKGROUND

In the field of telecommunications, the aim is to use the Internet more and more even in switching telephone traffic, data or speech. The most practical thing is then to use Internet protocols (IP) throughout the transmission link from the sender to the recipient. Transmitting speech through the Internet (Voice over IP) sets new challenges on the Internet technology, one of which is achieving a sufficient data transmission rate: headers typical of IP protocols take a great deal of space in their present form from the actual payload, i.e. data. To solve the problem, various methods for header compression have been developed. The aim of the compression methods is to reduce the proportion of the header in the entire transmitted packet, i.e. the header overhead ratio that is typically indicated in percentage.

For instance, when transmitting speech without header compression, the smallest possible IPv6/UPD/RTP (Internet Protocol version 6 / User Datagram Protocol / Real-Time Protocol) headers take a minimum of 60 octets. The transmission rate then becomes 24 kbit/s, when the transmission rate of packets is 50 packets/second.

Present header compression methods are developed for point-to-point systems, so they do not route. In addition, roaming is complex: both the base station controller and the compression algorithm must support context transfer and both the home network and the visited network must support the same compression algorithms. The document BORMANN: "RFC 3095: Robust Header Compression",IETF REQUEST FOR COMMENTS, July 2001 discloses a method for robust header compression in communication networks.

### BRIEF DESCRIPTION

It is an object of the invention to implement an improved compression method and an arrangement for implementing the method

The invention also relates to a method for transmitting data in a telecommunications network. The method comprises compressing the header of a data packet to be transmitted in the home network of the sender, storing a compression context in the home network of the sender, inserting the payload of the compressed data packet to a transporting protocol packet, replacing the identifier of the compression context of the compressed data packet with a Flow Label field, and routing the protocol packet transporting the payload to the recipient with a suitable algorithm by utilizing, when necessary, the information in the Flow Label field on the identifier of the compression context, wherein a .compression algorithm of the header is negotiated by using Session Initiation Protocol or Real Time Streaming Protocol.

The invention also relates to an arrangement for transmitting data in a telecommunications network. The arrangement comprises means for compressing the header of a data packet to be transmitted in the home network of the sender and for storing a compression context in the home network of the sender, the arrangement also comprises means for attaching the payload of the compressed data packet to a transporting protocol packet and for replacing the identifier of the compression context of the compressed data packet with a Flow Label field, the arrangement also comprises means for routing the protocol packet transporting the payload to the recipient with a suitable algorithm by utilizing, when necessary, the compression context stored in the home network of the sender, wherein a .compression algorithm of the header is negotiated by using Session Initiation Protocol or Real Time Streaming Protocol..

Preferred embodiments of the invention are described in the dependent claims.

The invention is based on the idea that the data packet to be transmitted is compressed in the home network of the sender, and the compression context is stored in the home network of the sender.

The method and arrangement of the invention provide several advantages. Header compression can be performed in any network element of the sender's home network, and the method supports IP routing.

### LIST OF FIGURES

The invention will now be described in greater detail by means of preferred embodiments and with reference to the attached drawings, in which
Figure 1 is an example of a telecommunications system,
Figure 2 shows the general format of an IPv6 header,
Figure 3 shows the format of a Hop-by-Hop Options header,
Figure 4 shows the format of a Destination Options header,
Figure 5 is a flow chart,
Figure 6 is a second flow chart,
Figure 7 shows routing IP header compression.

### DESCRIPTION OF EMBODIMENTS

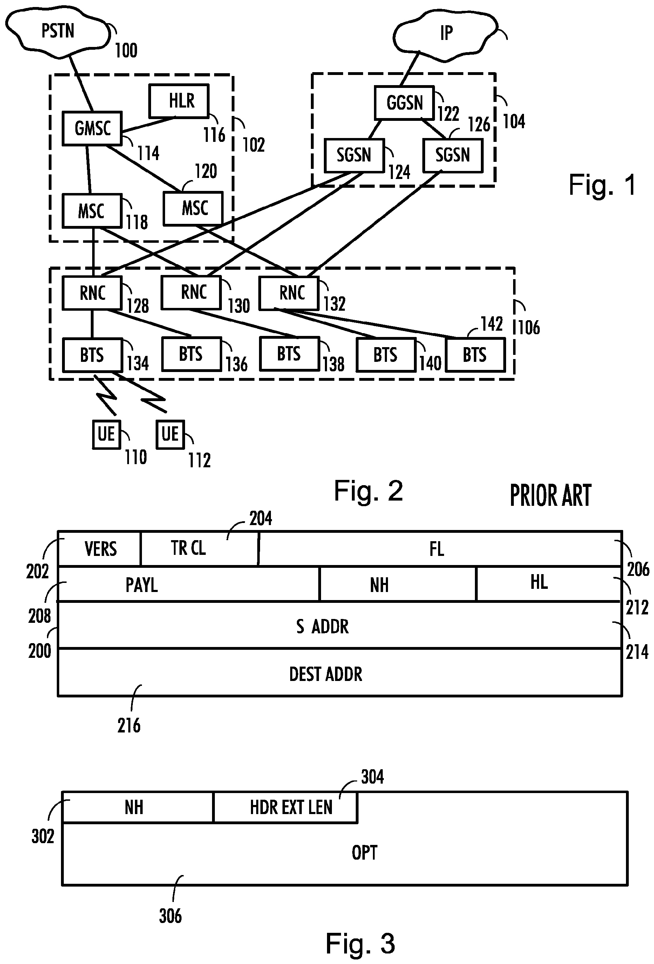

The general structure of a packet-switched telecommunications network is described next with reference to Figure 1. The example of the figure uses a UMTS network as the radio network, but it is apparent to a person skilled in the art that the invention can be applied to various communications systems, of which the cellular systems and the public switched telephone network PSTN are merely shown as examples. It is also apparent to a person skilled in the art that the method of the invention can also be applied to systems employing various modulation methods or air interface standards.

The main parts of a UMTS mobile network are a core network CN 102, a universal terrestrial radio access network UTRAN 106, and user equipment UE 110, 112. The core network is made up of one or more mobile switching centres MSC 118, 120, and a gateway mobile switching centre GMSC 114, which manages the external connections of the mobile system, herein with the public switched telephone network PSTN 100. The gateway mobile switching centre is connected to a home location register HLR 116, which contains subscriber information and from which information is retrieved during location updating or roaming and subscriber authentication.

UTRAN comprises radio network controllers RNC 128, 130, 132 and one or more B nodes, which are also called base stations 134, 136, 138, 140, 142. The service area of a base station is called a cell.

The radio network controller RNC 128, 130, 132 switches the connections of the user equipment elsewhere in the network. The radio network controller typically controls several base stations connected to it. A control unit in the radio network controller does call control, mobility management, statistics collection, and signalling, for instance.

A serving GPRS support node SGSN 124, 126 is part of the packet core network. Its task is to transmit and receive packets with user equipment supporting packet-switched transmission. Subscriber information and user equipment location information is stored in the serving GPRS support node.

A gateway GPRS support node GGSN 122 is the gateway support node of the packet switched side. Its task is to route traffic to the Internet 108, for instance, through which a considerable proportion of the wireless telephone traffic may in the future also be directed.

Further information on telecommunications systems can be found in the literature and standards of the field.

Next, the header format according to the Internet protocol version 6 is described by means of Figure 2. Figure 2 shows the header format 200 of the IPv6 standard. The Version field 202 is a 4-bit field and indicates the protocol version. The Traffic Class field 204 is an 8-bit field and indicates the traffic class. The information in the Traffic Class field is used in the originating node and routers to identify and distinguish the classes or priorities of the packets from each other. The Payload Length field 208 is a 16-bit unsigned integer and indicates the size of the end section of the packet following it, i.e. the payload length in octets. The Next Header field 210 is an 8-bit field and indicates the type of the header immediately following the IPv6 header. The Hop Limit field 212 is an 8-bit unsigned integer that is decreased by one in each node through which the packet is forwarded. When the value of this field is zero, the packet is no longer forwarded. The Source Address field 214 is a 218-bit field and indicates the source address of the packet. The Destination Address field 216 is also a 128-bit field and indicates the recipient of the packet that may be the actual recipient or a router.

The Flow Label field 206 is a 20-bit field and intended for instance for marking packet series that require special processing by the routers. The term 'flow' refers to a series of packets, for which a specific predefined processing is required in the routers. The Flow Label field can be used to indicate the quality of service, for instance. Packets that do not belong to the marked flow obtain zero as the Flow Label field value. All packets belonging to the same flow have the same source and destination address and the same flow label. The values of the Flow Label field can be selected from hexadecimal numbers within the range of 1 to FFFFF. The use of the Flow Label field is not yet specifically standardized.

Figure 3 shows the format of a Hop-by-Hop Options header 300. The Hop-by-Hop Options header is used to transport optional information that each node must examine on the route of the packet. The Hop-by-Hop Options header is identified by the value zero of the Next Header field of the IPv6 protocol header. The Next Header field 302 of the Hop-by-Hop Options header is an 8-bit field and identifies the type of the header following the Hop-by-Hop Options header. The Hdr Ext Len field 304 is also an 8-bit field and indicates the Hop-by-Hop Options header length in 8-octet units excluding the first eight octets. The Options field 306 is of varying length in such a manner that the length of the entire Hop-by-Hop Options header is an integer made up of a multiple of 8-octets.

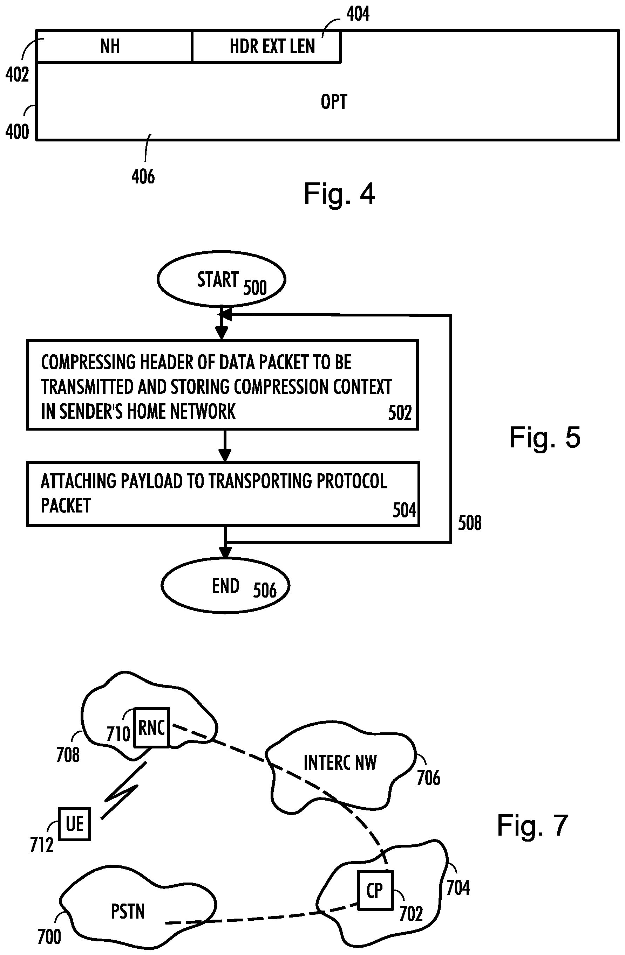

Figure 4 in turn shows the format of a Destination Options header 400. The Destination Options header is used to transport optional information that only the destination node of the packet needs to examine. The Destination Options header is identified by the value 60 of the Next Header field. The Next Header field 402 of the Destination Options header is in turn an 8-bit field and identifies the type of the header following the Destination Options header. The Hdr Ext Len field 404 is also an 8-bit field and indicates the length of the Destination Options header in 8-octet units excluding the first eight octets. The Options field 406 is of varying length in such a manner that the length of the entire Destination Options header is an integer made up of a multiple of 8-octets.

Further information on Internet protocols can be found in the literature and standards of the field.

Next, a preferred embodiment of the method for transmitting data in a telecommunications network is described in greater detail by means of Figure 5. The embodiment of the method enables the compression of packets according to the Internet protocol, i.e. IP packets, in such a manner that the compressed packets can be transmitted over an IP network. Compression refers to the compression of data. The invention can be applied to radio networks and wire networks. The description of the method does not comment on how the compression algorithm of the header is negotiated, because the negotiation methods are according to the protocol in question. It is, for instance, possible to use the SIP (Session Initiation Protocol) or RTSP (Real Time Streaming Protocol) protocols for the negotiation. The application of the method sets to the compression algorithm the limitation that the algorithm must allow a change of order of the packets. To say it in a simplified manner: an IP packet compressed in the method is encapsulated or tunnelled so that it can be transported over an IP network.

The execution of the method starts in block 500.

In block 502, the header of the data packet to be transmitted is compressed in the home network of the sender and a compression context is stored in the home network of the sender. The compression can be done in any network element of the sender's home network. Network elements include the base station, base station controller, serving GPRS support node, and gateway GPRS support node. A context refers to a view or assumption of an uncompressed packet. The information content of the context ID, i.e. identifier, reveals the original packet. The context ID (CID) is used in the decompression of the compressed packet.

The compression context comprises information required for compressed IP traffic. The context information is typically not very tolerant to very large unpredicted changes and its transmission is difficult, this is why it is advantageous to store the context information in the home network.

Compression can be done with a prior-art compression algorithm as stated above. Compression endeavours to reduce the size of the header by removing header fields or reducing their size.

A great deal of header information remains the same during the life of the packet flow, for instance some of TCP (Transmission Control Protocol) packet headers remain the same and some of them change only slightly and in a predictable manner. Similarly, the header information of UDP (User Datagram Protocol) packets does not change much. Typically, to compress a packet flow, CID, i.e. context identifier, is transmitted over the network to a decompressor. CID is usually a number, which to both the compressor and decompressor indicates a certain type of IP packet. The compressor and the decompressor store this information or a required part of it. Often the context changes only a little, so to update the context information, it is enough to transmit only the changed information. If the order of the packets changes during the transmission, they are rearranged before decompression. Compression algorithms are described in the literature and standards of the field, and are not described in greater detail herein.

In block 504, the payload of the compressed data packet is attached to the Internet protocol packet to be transported. One way of attaching the payload of the compressed packet to the IP packet is to add it as one of the Next Header fields by using the Hop-by-Hop Options header, for example, described in Figure 3, in which case the Options field 306 contains the compressed data packet. Another way is to use the Destination Options header described in Figure 4, if the packet contains at most 255 bits. The Options field 406 then contains the compressed data packet.

The execution of the method ends in block 506. Typically, an Internet protocol packet transporting payload is routed to the recipient with a suitable algorithm. For routing, the compressed packet is attached inside another IP packet, with which it can be transported to the desired recipient in the IP network. At the originating end, the packet is tunnelled, i.e. encapsulated inside an uncompressed IP packet. At the receiving end, the tunnelling is removed and the compressed packet is decompressed so that it can be transported in the IP network, or the transmission to the recipient is performed in some other manner and the decompression is done at the recipient.

Data can be routed between the Internet and a radio telecommunications network, for instance. Arrow 508 indicates one possibility to repeat the method.

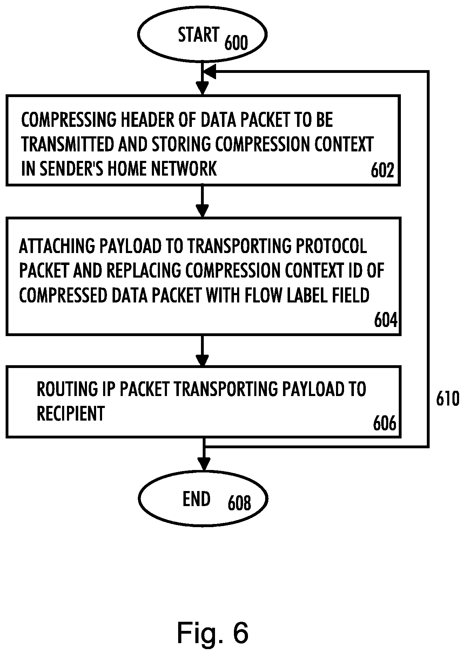

Next, a second preferred embodiment of the method for transmitting data in a telecommunications network is described in more detail by means of Figure 6. The embodiment of the method enables the compression of payload packets according to the Internet protocol. The invention can be applied to radio networks and wire networks. The description of the method does not comment on how the compression algorithm of the header is negotiated, because the negotiation methods are according to the protocol in question. It is, for instance, possible to use the SIP (Session Initiation Protocol) or RTSP (Real Time Streaming Protocol) protocols for the negotiation. The application of the method sets to the compression algorithm the limitation that the algorithm must allow a change of order of the packets. To say it in a simplified manner: an IP packet compressed in the method is encapsulated or tunnelled so that it can be transported over an IP network.

The execution of the method starts in block 600.

In block 602, the header of the data packet to be transmitted is compressed in the home network of the sender and a compression context is stored in the home network of the sender. The compression can be done in any network element of the sender's home network. Network elements include the base station, base station controller, serving GPRS support node, and gateway GPRS support node. A context refers to a view or assumption of an uncompressed packet. The information content of the context ID, i.e. identifier, reveals the original packet. The context ID (CID) is used in the decompression of the compressed packet.

The compression context comprises information required for compressed IP traffic. The context information is typically not very tolerant to very large unpredicted changes and its transmission is difficult, this is why it is advantageous to store the context information in the home network.

Compression can be done with a prior-art compression algorithm as stated above.

A great deal of header information remains the same during the life of the packet flow, for instance some of TCP (Transmission Control Protocol) packet headers remain the same and some of them change only slightly and in a predictable manner. Similarly, the header information of UDP (User Datagram Protocol) packets does not change much. Typically, to compress a packet flow, CID, i.e. context identifier, is transmitted over the network to a decompressor. CID is usually a number, which to both the compressor and decompressor indicates a certain type of IP packet. The compressor and the decompressor store this information or a required part of it. Often the context changes only a little, so to update the context information, it is enough to transmit only the changed information. If the order of the packets changes during the transmission, they are rearranged before decompression. Compression algorithms are described in the literature and standards of the field, and are not described in greater detail herein.

In block 604, the payload of the compressed data packet is attached to the Internet protocol packet to be transported and the compression context ID of the compressed data packet is replaced by a Flow Label field.

One way of attaching the payload of the compressed packet to the IP packet is to add it as one of the Next Header fields by using the Hop-by-Hop Options header, for example, described in Figure 3, in which case the Options field 306 contains the compressed data packet. Another way is to use the Destination Options header described in Figure 4, if the packet contains at most 255 bits. The Options field 406 then contains the compressed data packet.

The Flow Label field is a 20-bit field and it is intended for instance for marking packet series intended for instance for marking packet series that require special processing by the routers. The term 'flow' refers to a series of packets, for which a specific predefined processing is required in the routers. Packets that do not belong to the marked flow obtain zero as the Flow Label field value. All packets belonging to the same flow have the same source and destination address and the same flow label. The values of the Flow Label field can be selected from hexadecimal numbers within the range of 1 to FFFFF.

Context information of the compressor can be inserted into the Flow Label field, which enables as many as 2^20 compressed connections per one host computer.

In block 606, the IP packet transporting the payload is routed to the recipient with a suitable algorithm. Packet-data routing algorithms according to the Internet protocol are described in the literature.

Routing utilizes the Flow Label field that replaces the compression context identifier of the compressed data packet. Because the compression context is stored in the home network of the sender, changing the context information from a base station controller or some other corresponding network element to another requires the negotiation of only one common Flow Label space. On the other hand, the network server of the user's home network can also take care of Flow Label allocation, in which case the network elements in different networks need not negotiate a common Flow Label space. When using the Flow Label field in routing, the network elements of the operators negotiate during connection establishment, how the Flow Label field is processed during routing optimisation or quality of service definition, for instance.

On a radio interface, the Flow Label field of the user's compressed data flow can in UMTS networks, for instance, be replaced by the PID/CID (Packet Identifier, Context Identifier) field of the PDCP (Packet Data Convergence Protocol) protocol in the radio network controller.

The execution of the method ends in block 608. Arrow 610 shows one possible manner of repeating the method.

Next, the manner of compressing and routing a data packet during network routing according to one embodiment of the invention is described in more detail by means of the example in Figure 7. Figure 7 shows a part of a telecommunications network, in which the sender's home network 700 is a public switched telephone network and the destination is the recipient's user equipment 712 in a cellular network 708. Let us assume that the session is negotiated from the sender's home network to the recipient's network. A data packet according to the Internet protocol is transmitted from the sender's home network, whereby the compression point 702 of the network that resides in the core network 704 of the operator of the sender's home network compresses the packet in the manner described in the description of Figure 6 above, and stores the compression context. After this, the context identifier of the compressed data flow is replaced by a suitable Flow Label field.

The compressed data packet is next routed to an interconnection network 706 of different operators, assuming that the sender's network and the recipient's network are maintained by different operators. If the networks are maintained by the same operator, the interconnection network is not necessarily needed.

In the recipient's network, the compressed data flow is routed with a suitable algorithm to the radio interface network element of the recipient's network 708, for instance to a radio network controller 710. It should be noted that if the route is changed, for instance, compression context transmission is not needed, because the compression context is stored in the sender's home network.

Finally, the packet is routed to the recipient's user equipment 712. In the example of Figure 7, the recipient is in a radio network, so the packet is transmitted over a radio path to the recipient. In a radio interface, it is possible to use a header stripping function, if the Flow Label field is replaced by a suitable radio interface primitive, for instance PDCP (Packet Data Convergence Protocol) PID/CID (Packet Identifier, Context Identifier) field. The header stripping function is simply that the header of the packet used to transport and/or route the compressed packet is removed and the compressed payload is transported as such over the radio interface. This is an operation similar to the earlier described detunnelling.

Even though the invention is described above with reference to the examples of the attached drawings, it is apparent that the invention is not limited to them, but it can be modified in many ways within the scope of the attached claims.

## Claims

1. A method for transmitting data in a telecommunications network, comprising the steps of:
compressing (602) the header of a data packet to be transmitted in the sender's home network, and storing a compression context in the sender's home network,
attaching (604) the payload of the compressed data packet to a transporting protocol packet, and replacing the compression context identifier of the compressed data packet with a Flow Label field,
routing (606) the protocol packet transporting the payload to the recipient with a suitable algorithm by utilizing, if necessary, the information of the Flow Label field on the compression context identifier, wherein a compression algorithm of the header is negotiated by using Session Initiation Protocol or Real Time Streaming Protocol,
utilizing during roaming the compression context information stored in the sender's home network.

2. A method as claimed in claim 1, **characterized in that**, if the recipient's network is a radio telecommunications network, the Flow Label field is selected in such a manner that header stripping is performed on the radio interface, after which the compressed payload is transported over the radio interface.

3. A method as claimed in claim 1, **characterized by** routing data between the Internet and a radio telecommunications network.

4. An arrangement for transmitting data in a telecommunications network, wherein the arrangement comprises means (702) for compressing the header of a data packet to be transmitted in the sender's home network and for storing a compression context in the sender's home network,
the arrangement comprises means (702) for attaching the payload of the compressed data packet to a transporting protocol packet and for replacing the compression context identifier of the compressed data packet with a Flow Label field,
the arrangement comprises means (702, 704, 706, 708, 710) for routing the protocol packet transporting the payload to the recipient with a suitable algorithm by utilizing, if necessary, the compression context stored in the sender's home network, wherein a compression algorithm of the header is negotiated by using Session Initiation Protocol or Real Time Streaming Protocol,
the arrangement comprises means for utilizing during roaming the compression context information stored in the sender's home network.

5. An arrangement as claimed in claim 4, **characterized in that** the arrangement comprises means (710) for performing header stripping on the radio interface, after which the compressed payload is transported over the radio interface.

6. An arrangement as claimed in claim 4, **characterized in that** the arrangement comprises means (702, 704, 706, 708, 710) for routing data between the Internet and a radio telecommunications network.

## Patentansprüche

1. Verfahren zum Übertragen von Daten in einem Telekommunikationsnetz, umfassend die Schritte des:
Komprimierens (602) des Headers eines Datenpakets, das übertragen werden soll, im Heimnetz des Absenders und Speicherns eines Kompressionskontextes im Heimnetz des Absenders,
Anhängens (604) der Nutzlast des komprimierten Datenpakets an ein Transportprotokollpaket und Ersetzens der Kompressionskontext-Identifizierung des komprimierten Datenpakets mit einem Flow-Label-Feld,
Routens (606) des Protokollpakets, das die Nutzlast transportiert, zum Empfänger mit einem geeigneten Algorithmus unter Verwendung, falls erforderlich, der Informationen des Flow-Label-Feldes bezüglich der Kompressionskontext-Identifizierung, wobei ein Kompressionsalgorithmus des Headers unter Verwendung von Session Initiation Protocol oder Real Time Streaming Protocol verhandelt wird,
Verwendens der Kompressionskontext-Informationen, die im Heimnetz des Absenders gespeichert sind, während Roamings.

2. Verfahren nach Anspruch 1, **dadurch gekennzeichnet, dass** wenn das Netz des Empfängers ein Funktelekommunikationsnetz ist, das Flow-Label-Feld in einer derartigen Weise ausgewählt wird, dass an der Funkschnittstelle Header-Stripping ausgeführt wird, wonach die komprimierte Nutzlast über die Funkschnittstelle transportiert wird.

3. Verfahren nach Anspruch 1, **gekennzeichnet durch** Routen von Daten zwischen dem Internet und einem Funktelekommunikationsnetz.

4. Anordnung zum Übertragen von Daten in einem Telekommunikationsnetz, wobei
die Anordnung Mittel (702) zum Komprimieren des Headers eines Datenpakets, das übertragen werden soll, im Heimnetz des Absenders und zum Speichern eines Kompressionskontextes im Heimnetz des Absenders umfasst,
die Anordnung Mittel (702) zum Anhängen der Nutzlast des komprimierten Datenpakets an ein Transportprotokollpaket und zum Ersetzen der Kompressionskontext-Identifizierung des komprimierten Datenpakets mit einem Flow-Label-Feld umfasst,
die Anordnung Mittel (702, 704, 706, 708, 710) zum Routen des Protokollpakets, das die Nutzlast transportiert, zum Empfänger mit einem geeigneten Algorithmus unter Verwendung, falls erforderlich, des Kompressionskontextes, der im Heimnetz des Absenders gespeichert ist, umfasst, wobei ein Kompressionsalgorithmus des Headers unter Verwendung von Session Initiation Protocol oder Real Time Streaming Protocol verhandelt wird,
die Anordnung Mittel zum Verwenden der Kompressionskontext-Informationen, die im Heimnetz des Absenders gespeichert sind, während Roamings umfasst.

5. Anordnung nach Anspruch 4, **dadurch gekennzeichnet, dass** die Anordnung Mittel (710) zum Ausführen von Header-Stripping an der Funkschnittstelle umfasst, wonach die komprimierte Nutzlast über die Funkschnittstelle übertragen wird.

6. Anordnung nach Anspruch 4, **dadurch gekennzeichnet, dass** die Anordnung Mittel (702, 704, 706, 708, 710) zum Routen von Daten zwischen dem Internet und einem Funktelekommunikationsnetz umfasst.

## Revendications

1. Procédé de transmission de données dans un réseau de télécommunications comprenant les étapes consistant à :
comprimer (602) l'en-tête d'un paquet de données à transmettre dans le réseau personnel de l'expéditeur et stocker un contexte de compression dans le réseau personnel de l'expéditeur,
fixer (604) la charge utile du paquet de données comprimé à un paquet de protocole de transport et remplacer l'identifiant du contexte de compression du paquet de données comprimé par un champ d'étiquette de flux,
acheminer (606) le paquet de protocole transportant la charge utile au destinataire avec un algorithme approprié en utilisant, si nécessaire, les informations du champ d'étiquette de flux sur l'identifiant de contexte de compression, dans lequel un algorithme de compression de l'en-tête est négocié en utilisant un protocole d'initiation de session ou un protocole de diffusion en temps réel en utilisant au cours de l'itinérance les informations de contexte de compression stockées dans le réseau personnel de l'expéditeur.

2. Procédé selon la revendication 1, **caractérisé en ce que**, si le réseau du destinataire est un réseau de télécommunications radio, le champ d'étiquette de flux est choisi de manière qu'un dépouillement d'en-tête soit effectué sur l'interface radio, après quoi la charge utile comprimée est transportée via l'interface radio.

3. Procédé selon la revendication 1, **caractérisé par** un routage de données entre l'Internet et un réseau de télécommunications radio.

4. Agencement de transmission de données dans un réseau de télécommunications, dans lequel :
l'agencement comprend des moyens (702) pour comprimer l'en-tête d'un paquet de données à transmettre dans le réseau personnel de l'expéditeur et pour stocker un contexte de compression dans le réseau personnel de l'expéditeur,
l'agencement comprend des moyens (702) pour fixer la charge utile du paquet de données comprimé à un paquet de protocole de transport et pour remplacer l'identifiant de contexte de compression du paquet de données comprimé par un champ d'étiquette de flux,
l'agencement comprend des moyens (702, 704, 706, 708, 710) pour router le paquet de protocole transportant la charge utile vers le destinataire avec un algorithme approprié en utilisant, si nécessaire, le contexte de compression stocké dans le réseau personnel de l'expéditeur, dans lequel un algorithme de compression de l'en-tête est négocié en utilisant un protocole d'initiation de session ou un protocole de diffusion en temps réel, l'agencement comprenant des moyens pour utiliser au cours de l'itinérance les informations de contexte de compression stockées dans le réseau personnel de l'expéditeur.

5. Agencement selon la revendication 4, **caractérisé en ce que** l'agencement comprend des moyens (710) pour effectuer un dépouillement de l'en-tête sur l'interface radio, après quoi la charge utile comprimée est transportée via l'interface radio.

6. Agencement selon la revendication 4, **caractérisé en ce que** l'agencement comprend des moyens (702, 704, 706, 708, 710) pour router des données entre l'Internet et un réseau de télécommunications radio.
